# FASCICULE DE BREVET EUROPEEN

(11) **EP 3 674 151 B1**
(45) Date de publication et mention de la délivrance du brevet: **01.09.2021**
(21) Numéro de dépôt: 19216837.5
(22) Date de dépôt: 17.12.2019
(51) Int. Cl.: B60S 1/56

(54) **SYSTÈME DE NETTOYAGE POUR UN BLOC DE CAPTEURS POUR VÉHICULE**
REINIGUNGSSYSTEM FÜR EINE SENSOREINHEIT FÜR EIN FAHRZEUG
CLEANING SYSTEM FOR A SENSOR UNIT FOR A VEHICLE

(30) Priorité: 26.12.2018 FR 1874193
(43) Date de publication de la demande: 01.07.2020
(73) Titulaire: Valeo Systèmes d'Essuyage, 78322 Le Mesnil Saint Denis (FR)
(72) Inventeur: VIEILLE, Jordan, 63500 ISSOIRE (FR); BAUDOUIN, Maxime, 63500 ISSOIRE (FR); RENOUX, Pascal, 63500 ISSOIRE (FR); LABAYE, Aurélien, 63500 ISSOIRE (FR)
(74) Mandataire: Valeo Visibility

(56) Documents cités:
- DE-A1-102016 200 835
- US-A1- 2017 151 933

## Description

La présente invention se rapporte au domaine de l'aide à la conduite et notamment aux systèmes de nettoyage compris dans des systèmes d'assistance à la conduite. Plus particulièrement, l'invention concerne les systèmes d'assistance à la conduite comportant un ensemble optique et un système de nettoyage de l'ensemble optique.

Les véhicules automobiles comprennent de plus en plus de systèmes automatisés, parmi lesquels on distingue notamment des systèmes d'aide à la conduite qui peuvent permettre aussi bien, dans un moindre degré d'autonomie du véhicule, d'aider ou de réaliser des manœuvres de stationnement que de réaliser, dans un degré maximum d'autonomie du véhicule, le pilotage du véhicule sans qu'un conducteur soit présent dans le véhicule. De tels systèmes d'aide à la conduite comprennent notamment un ou plusieurs dispositifs de détection munis de capteurs optiques aptes à détecter un environnement du véhicule et aptes à évaluer des paramètres externes à ce véhicule. Les capteurs optiques sont associés à au moins une unité de contrôle configurée pour interpréter les informations ainsi recueillies et pour prendre les décisions qui s'imposent en conséquence de ces informations.

Plus particulièrement, la mise en œuvre de véhicules autonomes, sans conducteur, implique l'utilisation d'une pluralité de capteurs optiques disposés tout autour du véhicule, pour que l'unité de contrôle ait une image très précise de l'environnement du véhicule, au moins aussi fiable que l'image tridimensionnelle qu'un conducteur pourrait obtenir par lui-même. A cet effet, des capteurs optiques peuvent être disposés au plus près les uns des autres de manière à former des blocs de capteurs avec des premiers capteurs optiques aptes à reproduire une image de la scène de route par émission et réception d'ondes, notamment laser, et des deuxièmes capteurs optiques de type caméra de vision. La résolution de l'image acquise par les caméras de vision et la représentation tridimensionnelle qu'autorisent les modules de détection laser permet d'imager de façon fiable la scène de route autour du véhicule.

Les dispositifs de détection comportant un capteur optique ou un bloc de capteurs optiques sont connus pour être installés à l'extérieur des véhicules à différents endroits selon l'utilisation qui en est faite. Les capteurs optiques peuvent ainsi se retrouver au niveau du toit, du pare-chocs arrière ou avant du véhicule, au niveau de la plaque d'immatriculation arrière ou avant du véhicule ou encore sur les flancs du véhicule ou ses rétroviseurs.

Chaque dispositif de détection, disposé à l'extérieur du véhicule, est fortement exposé aux projections de saletés minérales ou organiques qui peuvent se déposer sur leur optique. Un dépôt de saletés qui en résulte réduit l'efficacité du dispositif de détection, voire le rend inopérant. En particulier par temps de pluie, on constate des projections de pluie et de saletés qui peuvent grandement affecter l'opérabilité du système d'assistance à la conduite comprenant de tels capteurs optiques. Les surfaces optiques des capteurs optiques doivent donc être chacune nettoyées afin de garantir leur bon état de fonctionnement.

La présente invention s'inscrit dans ce contexte et vise à proposer un système de nettoyage pour plusieurs capteurs optiques, ledit système de nettoyage étant mutualisé pour les différents capteurs optiques, dans un souci d'économie d'énergie, de réduction de la quantité de matériel embarquée sur le véhicule et de compacité du système d'aide à la conduite. Le document US 2017/0151933 A1 montre un système de nettoyage pour un bloc de capteurs d'au moins deux capteurs pour véhicule selon le préambule de la première revendication.

L'invention concerne un système de nettoyage pour un bloc de capteurs d'au moins deux capteurs pour véhicule, le système de nettoyage comprenant un premier ensemble de nettoyage comportant au moins une première lame destinée au nettoyage par balayage d'une première surface optique d'un premier capteur optique du bloc de capteurs, un deuxième ensemble de nettoyage comportant au moins une deuxième lame destinée au nettoyage par balayage d'une deuxième surface optique d'un deuxième capteur optique du bloc de capteurs, le système de nettoyage comprenant en outre un dispositif d'entraînement en rotation simultanée, autour d'un axe commun de rotation, du premier ensemble de nettoyage et du deuxième ensemble de nettoyage, le dispositif d'entraînement comportant au moins un palier de fixation sur lequel sont fixés de façon indépendante chacun des ensembles de nettoyage.

Le système de nettoyage comprend des éléments mobiles en rotation autour de l'axe de rotation, mus par le dispositif d'entraînement. Parmi les éléments mobiles en rotation, on trouve au moins le premier ensemble de nettoyage et le deuxième ensemble de nettoyage qui sont amenés à se déplacer en rotation autour de l'axe de rotation de façon simultanée. On comprend que de la sorte un déplacement angulaire donné du premier ensemble de nettoyage sur la surface optique du capteur optique correspondant implique un déplacement angulaire de valeur d'angle correspondante du deuxième ensemble de nettoyage en regard de la surface optique du capteur optique correspondant

En d'autres termes, le premier ensemble de nettoyage et le deuxième ensemble de nettoyage font partie d'un même système de nettoyage, apte à nettoyer deux surfaces distinctes. Le système de nettoyage est apte à être activé en un mouvement de rotation commun pour nettoyer, en les raclant, la première surface optique et la deuxième surface optique.

Selon une caractéristique de l'invention, le dispositif d'entraînement comporte une manivelle et un moteur électrique, le premier ensemble de nettoyage et le deuxième ensemble de nettoyage étant entraînés en rotation par le moteur électrique par l'intermédiaire de la manivelle qui porte ledit palier de fixation.

Le mouvement de rotation commun est assuré par la manivelle qui fait le lien entre le moteur électrique et le premier ensemble de nettoyage d'une part, et le moteur électrique et le deuxième ensemble de nettoyage d'autre part. Le premier ensemble de nettoyage et le deuxième ensemble de nettoyage sont distincts mais leur déplacement en rotation entre une première position extrême de repos, dans laquelle les ensembles de nettoyage ne sont pas dans le champ de vision des capteurs optiques, et une deuxième position extrême, dans laquelle les ensembles de nettoyage ont balayé toute la surface optique correspondante, est dépendant de la même manivelle.

La manivelle qui porte le palier de fixation peut comporter par ailleurs au moins une branche principale qui est d'extension radiale, en ce sens qu'elle s'étend perpendiculairement à l'axe de rotation, depuis l'axe de rotation.

Selon un aspect de l'invention, le premier ensemble de nettoyage comprend au moins une première lame et un premier support de lame, et le deuxième ensemble de nettoyage comprend au moins une deuxième lame distincte de la première lame et un deuxième support de lame distinct du premier support de lame. Chaque ensemble de nettoyage comprend sa propre lame et son propre support de lame. La première lame est destinée à racler la première surface optique et la deuxième lame est destinée à racler la deuxième surface optique. Le premier support de lame maintient la première lame et la relie aux autres éléments du système de nettoyage via le palier de fixation. Il en est de même pour le deuxième support de lame avec la deuxième lame.

Le premier ensemble de nettoyage peut comprendre au moins un premier connecteur solidaire du premier support de lame et un premier adaptateur, monté pivotant relativement au premier connecteur, qui permet la liaison au palier de fixation.

Le deuxième ensemble de nettoyage peut comprendre au moins un deuxième connecteur solidaire du deuxième support de lame et un deuxième adaptateur, monté pivotant relativement au deuxième connecteur, qui permet la liaison au palier de fixation. Selon différentes caractéristiques de l'invention, on peut prévoir que le premier support de lame et le deuxième support de lame sont montés sur le palier de fixation de façon indépendante. Et que le premier support de lame et le deuxième support de lame peuvent être montés sur le palier de fixation de façon articulée indépendamment l'un de l'autre, de sorte à générer un moyen élastique de rappel en position visant à plaquer la lame de l'ensemble de nettoyage contre la surface à nettoyer.

En d'autres termes, le premier support de lame peut être reliée au palier de fixation par une première articulation et le deuxième support de lame peut être reliée au palier de fixation par une deuxième articulation indépendante. De la sorte, la liaison entre le palier de fixation et chaque ensemble de nettoyage permet, notamment lors de la mise en rotation du système de nettoyage, de plaquer de façon indépendante le premier ensemble de nettoyage sur la première surface optique et le deuxième ensemble de nettoyage sur la deuxième surface optique. En assurant ce plaquage, le dispositif d'entraînement permet de garantir un frottement entre ensemble de nettoyage et surface optique, nécessaire pour le nettoyage de ladite surface optique. Et on comprend que l'articulation indépendante de chaque ensemble de nettoyage permet un plaquage indépendant de chaque lame sur la surface à nettoyer, ce qui permet d'adapter la pression à appliquer, par l'intermédiaire de l'articulation, en fonction des variations de courbure de la surface optique à nettoyer. En d'autres termes, il est possible avec le système de l'invention d'appliquer une force de pression différente sur le premier ensemble de nettoyage et sur le deuxième ensemble de nettoyage, pour s'adapter par exemple à des niveaux de saletés différents des surfaces optiques à nettoyer, au cours de leur rotation simultanée.

Les articulations sont indépendantes en ce sens qu'elles donnent une mobilité distincte à l'un et l'autre des supports de lame qu'elles portent. Tel que cela vient d'être décrit, cette mobilité permet de suivre le relief de la surface optique considérée, par rappel élastique, notamment pour assurer le raclage de cette dernière.

Selon une caractéristique de l'invention, les première et deuxième articulations sont formées par des liaisons pivots d'axe de pivotement perpendiculaire à l'axe de rotation du système de nettoyage.

Selon un aspect de l'invention, la branche principale de la manivelle comprend à une première extrémité un moyen de fixation à un arbre moteur du moteur électrique et à une deuxième extrémité, opposée à la première extrémité, un moyen de liaison comportant le palier de fixation au premier ensemble de nettoyage et au deuxième ensemble de nettoyage. Le moteur électrique entraine en rotation l'arbre moteur et la manivelle déporte, par la disposition radiale de la branche principale notamment, le mouvement de rotation de l'arbre moteur pour le transmettre au premier ensemble de nettoyage et au deuxième ensemble de nettoyage. La manivelle est ainsi liée à la fois à l'arbre moteur et aux deux ensembles de nettoyage. La première extrémité de la branche principale est proximale à l'axe de rotation et la deuxième extrémité de la branche principale est distale à l'axe de rotation.

Le moyen de fixation de la première extrémité de la branche principale est destiné à solidariser la manivelle à l'arbre moteur, sans entraver le mouvement de rotation de l'arbre moteur. Dans un exemple de réalisation, le moyen de fixation est destiné à emmancher une extrémité terminale de l'arbre moteur. La première extrémité s'étend alors selon l'axe de rotation. Dans un exemple de réalisation, le moyen de fixation comprend une ouverture apte à coopérer avec l'arbre moteur. La première extrémité s'étend alors selon l'axe de rotation et/ou transversalement à l'axe de rotation. Par exemple, la première extrémité comprend une portion coudée.

Le palier de fixation sert à supporter la fixation du premier support de lame et du deuxième support de lame sur le moyen de liaison. Le palier de fixation est par exemple une zone renforcée du moyen de liaison.

Selon un aspect de l'invention, le moyen de liaison de la deuxième extrémité de la manivelle comprend une branche secondaire entre le palier de fixation et la branche principale, la branche secondaire s'étendant selon un axe d'extension parallèle à l'axe de rotation. La branche secondaire constitue une extension de la branche principale. Elle est, avantageusement, similaire en forme. Cependant, la branche secondaire est d'extension transverse à la banche principale, et plus particulièrement perpendiculaire à la banche principale.

Selon un aspect de l'invention, l'un et/ou l'autre des ensembles de nettoyage comprend un bras, le bras reliant l'un et/ou l'autre des supports de lame au palier de fixation de la deuxième extrémité de la manivelle.

Lorsque chaque ensemble de nettoyage comprend un bras, le premier ensemble de nettoyage comprend le bras, dit premier bras, et le deuxième ensemble de nettoyage comprend un autre bras, dit deuxième bras, le premier bras reliant le premier support de lame au palier de fixation de la manivelle et le deuxième bras reliant le deuxième support de lame à ce même palier de fixation de la manivelle. Alternativement, seul l'un des ensembles de nettoyage comprend un bras. On comprend que la présence d'un bras donne une plus grande portée à l'ensemble de nettoyage tout en assurant un contact régulier entre la lame et la surface optique.

L'invention vise également un ensemble optique pour véhicule comprenant au moins un bloc de capteurs et un système de nettoyage tel que précédemment décrit, le bloc de capteurs comprenant au moins un premier capteur optique et un deuxième capteur optique superposés l'un sur l'autre selon l'axe de rotation, le premier capteur optique ayant une première surface optique et le deuxième capteur optique ayant une deuxième surface optique, le système de nettoyage comprenant le premier ensemble de nettoyage destiné au nettoyage de la première surface optique et le deuxième ensemble de nettoyage destiné au nettoyage de la deuxième surface optique. Le premier capteur optique et le deuxième capteur optique sont ainsi chacun dotés d'un ensemble de nettoyage qui leur est dédié. Le bloc de capteurs et le système de nettoyage coopèrent pour assurer une double détection, par chacun des capteurs optiques, et un double nettoyage, pour chacune des surfaces optiques.

Le bloc de capteurs comprend au moins deux capteurs optiques. Parmi les capteurs optiques, on trouve notamment des capteurs utilisant la lumière du spectre visible, du spectre infrarouge et/ou du spectre ultraviolet. Par exemple, le premier capteur optique et/ou le deuxième capteur optique est une caméra optique, ou capteur à détection lumineuse, dit LIDAR pour l'acronyme anglais « *Light Detection And Ranging* ». Avantageusement, le premier capteur optique est de nature différente du deuxième capteur optique. Par exemple, le premier capteur optique est une caméra de vision et le deuxième capteur optique est un capteur LIDAR.

La première surface optique et la deuxième surface optique présentent avantageusement une forme courbe autour de l'axe de rotation. Par de telles formes courbes, on entend que les surfaces optiques prennent la forme d'un cylindre ou d'une portion de cylindre dont la génératrice est parallèle à l'axe de rotation. Avantageusement, ledit cylindre ou ladite portion de cylindre est centrée sur l'axe de rotation.

La première surface optique et la deuxième surface optique sont dimensionnées en proportion du premier capteur optique et du deuxième capteur optique. Dans un exemple de réalisation, le premier capteur optique est de dimension différente par rapport deuxième capteur optique.

Dans le cas d'un premier capteur optique correspondant à une caméra de vision et d'un deuxième capteur optique correspondant à un capteur LIDAR, la deuxième surface optique est plus grande que la première surface optique. Par exemple, le premier capteur optique et la première surface optique ont une dimension plus grande que respectivement le deuxième capteur optique et la deuxième surface optique.

Dans le bloc de capteurs, le premier capteur optique et le deuxième capteur optique sont superposés l'un sur l'autre selon l'axe de rotation, sur lequel ils sont centrés. Le premier capteur optique et le deuxième capteur optique sont avantageusement de dimension radiale sensiblement égale. La dimension radiale est mesurée perpendiculairement depuis l'axe de rotation vers la surface optique du capteur optique considéré. On comprend de ce qui a été décrit précédemment qu'une dimension radiale sensiblement égale permet de balayer simultanément les deux surfaces optiques par l'intermédiaire de son ensemble de nettoyage dédié, avec les ensembles de nettoyage qui sont alignés selon un axe parallèle à l'axe de rotation. Sans sortir du contexte de l'invention, on pourrait prévoir des capteurs optiques du même bloc optique qui présentent des dimensions radiales différentes, dès lors que le palier de fixation commun aux deux ensembles de nettoyage est configuré pour que les deux ensembles de nettoyage s'étendent à des distances radiales différentes de l'axe de rotation.

Selon un aspect de l'invention, la manivelle est disposée à une des extrémités longitudinales du bloc de capteurs. Les extrémités longitudinales du bloc de capteurs sont opposées l'une à l'autre selon l'axe de rotation.

Dans ce contexte, on peut prévoir que le premier capteur optique, disposé entre la branche principale de la manivelle et le deuxième capteur optique, est un capteur de plus petite dimension longitudinale que le deuxième capteur optique.

Selon un aspect alternatif de l'invention, le premier capteur optique et le deuxième capteur optique sont séparés d'une zone de dégagement, la branche principale de la manivelle étant disposée dans la zone de dégagement, la zone de dégagement étant configurée pour que la manivelle puisse se déplacer en rotation selon l'axe de rotation, entre une première position extrême et une deuxième position extrême. La zone de dégagement est un espace laissé entre les deux capteurs optiques disposés l'un au-dessus de l'autre. La zone de dégagement est aménagée pour laisser libre en rotation la manivelle.

Notamment, la zone de dégagement est dimensionnée longitudinalement pour laisser une place suffisante à la manivelle, mais aussi pour qu'à l'usage la manivelle qui serait entrée en flexion ne vienne pas en contact avec le bloc de capteurs. Il est toutefois notable que dans le contexte d'application de l'ensemble de nettoyage à du nettoyage de capteurs optiques, le fléchissement éventuel de la manivelle, du fait d'une déformation élastique induite par le poids de l'ensemble de nettoyage et/ou de par les mouvements de rotations répétées, ou toute autre raison liée à l'usure de l'ensemble, est minime, ce qui permet de ne pas prévoir de moyens de guidage en rotation de la manivelle.

Dans un exemple de réalisation, la manivelle est pourvue d'un renfort configuré pour empêcher la flexion de la manivelle. Par exemple, le renfort correspond à un épaississement de la première extrémité de la branche principale de la manivelle, au niveau ou aux abords du moyen de fixation.

La première position extrême et la deuxième position extrême définissent l'étendue de la surface nettoyée. Avantageusement, des mouvements en rotation alternatifs, faisant passer de la première position extrême à la deuxième position extrême et *vice et versa,* permettent au système de nettoyage de balayer, entre ces deux positions, le champ de vision de chacun des capteurs optiques de sorte à pouvoir nettoyer le champ de vision nécessaire au bon fonctionnement desdits capteurs optiques.

Selon un aspect de l'invention, la deuxième surface optique est de dimension longitudinale, selon la direction parallèle à l'axe de rotation, plus grande que la première surface optique, et le deuxième ensemble de nettoyage est de dimension longitudinale plus grande que le premier ensemble de nettoyage. La dimension longitudinale est mesurée parallèlement à l'axe de rotation du rotor, depuis une extrémité longitudinale de l'objet considéré, à une extrémité longitudinale opposée. Alternativement, la deuxième surface optique est de dimension longitudinale sensiblement identique par rapport au la première surface optique.

Quelles que soient les dimensions longitudinales du premier capteur optique et du deuxième capteur optique, le premier ensemble de nettoyage et le deuxième ensemble de nettoyage sont dimensionnés en conséquence, pour s'adapter respectivement à la première surface optique et à la deuxième surface optique et nettoyer leur champ de vision. Ainsi, dans un exemple de réalisation, le premier ensemble de nettoyage est de dimension longitudinale différente par rapport au deuxième ensemble de nettoyage, par exemple plus petit. Dans un autre exemple de réalisation, le premier ensemble de nettoyage est de dimension longitudinale sensiblement identique par rapport au deuxième ensemble de nettoyage.

Selon un aspect de l'invention, la première lame s'étend entre une première extrémité longitudinale du premier capteur optique et une deuxième extrémité longitudinale du premier capteur optique, opposée à la première extrémité longitudinale du premier capteur optique. La première lame s'étend sur une partie de la dimension longitudinale du premier capteur optique. Avantageusement, la première lame s'étend sur une portion de la dimension longitudinale qui est la plus proche de la zone de dégagement.

Selon un aspect de l'invention, la deuxième lame s'étend entre une première extrémité longitudinale du deuxième capteur optique et une deuxième extrémité longitudinale du deuxième capteur optique, opposée à la première extrémité longitudinale du deuxième capteur optique. La deuxième lame s'étend au moins sur une portion de la dimension longitudinale du deuxième capteur optique, et avantageusement sur toute la dimension longitudinale du deuxième capteur. Pour un deuxième capteur optique type capteur LIDAR, toute la surface optique est fonctionnelle et est à nettoyer pour que ledit deuxième capteur optique fonctionne.

L'invention vise également un dispositif d'aide à la conduite comprenant au moins un système de nettoyage ou un ensemble optique tels que précédemment décrits. Le dispositif d'aide à la conduite peut comporter en outre une unité de contrôle.

Le dispositif d'aide à la conduite peut comprendre deux ensembles optiques, par exemple disposés sur chaque flanc du véhicule. Le dispositif d'aide à la conduite peut comprendre quatre ensembles optiques, par exemple disposés aux quatre coins du toit du véhicule.

L'unité de contrôle analyse l'environnement du véhicule et/ou contrôle la vision des capteurs. Elle est apte à analyser les données obtenues par le bloc de capteur et/ou apte à enclencher le système de nettoyage. L'unité de contrôle peut enclencher le système de nettoyage de façon périodique et/ou lorsque la première surface optique et/ou la deuxième surface optique doivent être nettoyées, par exemple en cas de difficultés de prise de vue au niveau de l'un et/ou l'autre des capteurs optiques.

D'autres caractéristiques, détails et avantages de l'invention ressortiront plus clairement à la lecture de la description donnée ci-après à titre indicatif en relation avec des dessins dans lesquels :
- la [Figure 1] est une vue générale en situation, d'un ensemble optique comprenant un système de nettoyage selon l'invention, en situation sur le toit d'un véhicule,
- la [Figure 2] est une vue en perspective de l'ensemble optique comprenant un système de nettoyage selon l'invention,
- la [Figure 3] est une vue en perspective du système de nettoyage selon l'invention illustré en [Figure 2].
- la [Figure 4] est une vue en perspective de l'ensemble optique comprenant un système de nettoyage selon l'invention dans un autre mode de réalisation que celui présenté en [Figure 3],
- la [Figure 5] est une vue en perspective du système de nettoyage selon l'invention illustré en [Figure 4].

Il faut tout d'abord noter que les figures exposent l'invention de manière détaillée pour mettre en œuvre l'invention, lesdites figures pouvant bien entendu servir à mieux définir l'invention le cas échéant.

Dans la suite de la description, les dénominations longitudinales ou latérales, dessus, dessous, se réfèrent à l'orientation de l'ensemble optique ou du système de nettoyage selon l'invention. La direction longitudinale correspond à l'axe de rotation du système de nettoyage, alors que les orientations latérales correspondent à des droites concourantes, c'est-à-dire qui croisent la direction longitudinale, notamment radiales à l'axe de rotation.

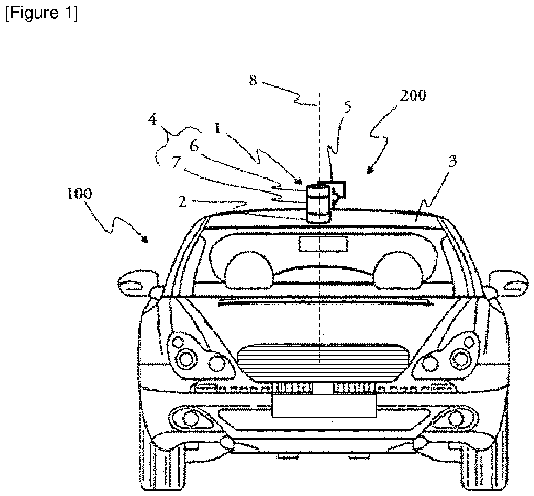

En se référant tout d'abord à la [Figure 1], un véhicule 100 est doté d'un dispositif d'aide à la conduite 200 comprenant un ensemble optique 1 selon l'invention et une unité de contrôle 2. L'ensemble optique 1 est fixé au toit 3 du véhicule 100 et centré sur le toit 3 du véhicule 100. La position et le nombre d'ensemble(s) optique(s) 1 pourraient être différents de ceux présentés en [Figure 1] sans nuire à la portée de l'invention.

L'ensemble optique 1 comprend un bloc de capteurs 4 et un système de nettoyage 5. Le bloc de capteurs 4 comprend au moins deux capteurs 6, 7. En l'espèce, le bloc de capteurs 4 comprend un premier capteur optique 6 et un deuxième capteur optique 7 superposés l'un sur l'autre selon l'axe de rotation 8. L'unité de contrôle 2 est par exemple disposée conjointement à l'ensemble optique 1, par exemple superposé avec le bloc de capteurs 4 selon l'axe de rotation 8.

Le premier capteur optique 6 est ici une caméra de vision, et le deuxième capteur optique 7 est ici un capteur LIDAR pour l'acronyme anglais « *Light Detection And Ranging* ». La détection conjointe d'un environnement extérieur au véhicule 100 par le premier capteur optique 6 et par le deuxième capteur optique 7 génère des données transmises à l'unité de contrôle 2. L'unité de contrôle 2 participe à assister à la conduite du véhicule 100. L'unité de contrôle 2 est également apte à enclencher le système de nettoyage 5, de façon périodique et/ou lorsque le champ de vision de l'un et/ou l'autre capteur 6, 7 est altéré.

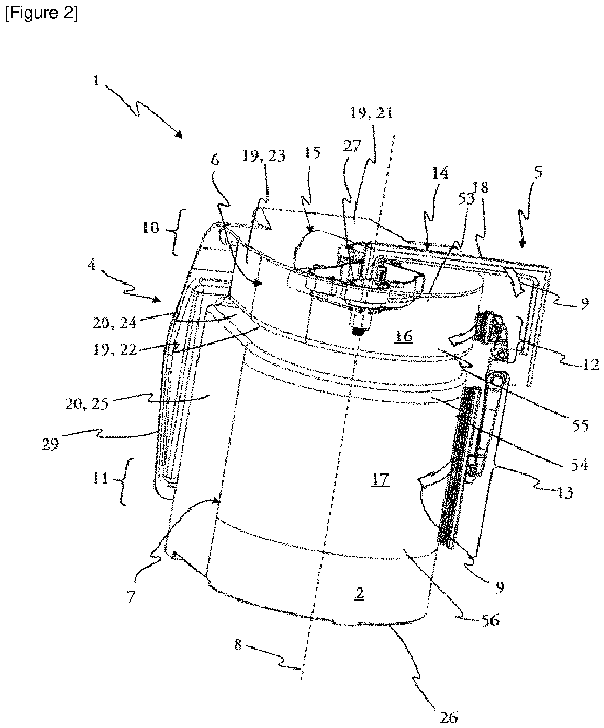

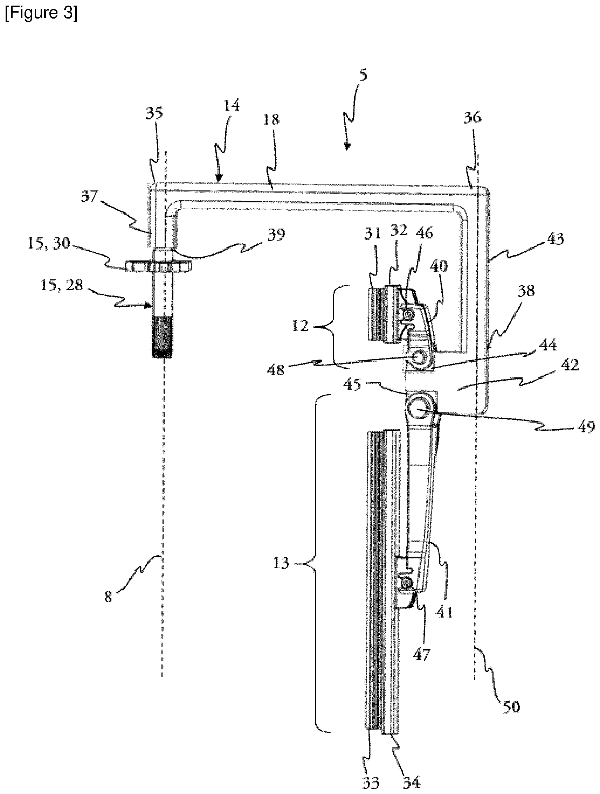

La [Figure 2] montre l'ensemble optique 1 comprenant le système de nettoyage 5 pour le bloc de capteurs 4 dans un premier mode de réalisation. Pour faciliter la lecture de la figure, le bloc de capteurs 4 est transparent de sorte à laisser apparaitre le système de nettoyage 5. Ce même système de nettoyage 5 est décrit plus amplement en [Figure 3].

Le système de nettoyage 5 est monté mobile en rotation autour de l'axe de rotation 8. Ce mouvement de rotation est illustré par des flèches 9. Le bloc de capteurs 4 étend sa plus grande dimension selon cet axe de rotation 8, entre une première extrémité longitudinale 10 et une deuxième extrémité longitudinale 11.

Le système de nettoyage 5 comprend un premier ensemble de nettoyage 12, un deuxième ensemble de nettoyage 13, et un dispositif d'entraînement en rotation simultanée de ces deux ensembles de nettoyage, qui comporte notamment une manivelle 14 et un moteur électrique 15.

Le premier ensemble de nettoyage 12 est destiné au nettoyage par balayage d'une première surface optique 16 du premier capteur optique 6. Le deuxième ensemble de nettoyage 13 est destiné au nettoyage par balayage d'une deuxième surface optique 17 du deuxième capteur optique 7.

Le moteur électrique 15 est apte à entraîner en rotation le système de nettoyage 5 selon l'axe de rotation 8. Par « entraîner en rotation le système de nettoyage 5 » on entend que le moteur électrique 15 entraîne simultanément en rotation le premier ensemble de nettoyage 12 et le deuxième ensemble de nettoyage 13. Le cas échéant, tel que cela est notamment visible sur la [Figure 3], un dispositif de réduction 30 peut être interposé entre le moteur électrique 15 et la manivelle 14.

La manivelle 14 relie le premier ensemble de nettoyage 12 et le deuxième ensemble de nettoyage 13 au moteur électrique 15. La manivelle 14 comprend au moins une branche principale 18 d'extension radiale par rapport à l'axe de rotation 8.

Dans le bloc de capteurs 4, le premier capteur optique 6 et le deuxième capteur optique 7 sont superposés l'un sur l'autre selon l'axe de rotation 8. Le premier capteur optique 6 est disposé du côté de la première extrémité longitudinale 10 du bloc de capteurs 4 et le deuxième capteur optique 7 est disposé du côté de la deuxième extrémité longitudinale 11 du bloc de capteurs 4. L'unité de contrôle 2 est ici disposée du côté de la deuxième extrémité longitudinale 11, étant noté que l'unité de contrôle pourrait être prévue à distance du bloc de capteurs 4.

La deuxième surface optique 17 du deuxième capteur optique est de dimension longitudinale plus grande que la première surface optique 16 du premier capteur optique, et le deuxième ensemble de nettoyage 13 est de dimension longitudinale plus grande que le premier ensemble de nettoyage 12.

La première surface optique 16 et la deuxième surface optique 17 présentent une forme régulière courbe et semi cylindriques, toutes deux coaxiales et centrées sur l'axe de rotation 8. Elles s'étendent sur environ un angle de 180°, soit un demi-cylindre, correspondant au champ de vision maximal, respectivement, de la première surface optique 16 et de la deuxième surface optique 17. La première surface optique 16 et la deuxième surface optique 17 sont dans le prolongement longitudinal l'une de l'autre, de sorte à ce que l'une ou l'autre ne soit pas en saillie radiale par rapport à l'autre surface optique.

Le premier capteur optique 6 comprend un premier boîtier de protection 19 destiné à protéger le premier capteur optique 6 de l'environnement extérieur au véhicule. Le deuxième capteur optique 7 comprend un deuxième boîtier de protection 20 destiné à protéger le deuxième capteur optique 7 de l'environnement extérieur au véhicule.

Le premier boîtier de protection 19 est doté de la première surface optique 16, d'une paroi transversale supérieure 21, d'une première paroi transversale intermédiaire 22 et d'une première paroi périphérique 23. Le deuxième boîtier de protection 20 est doté de la deuxième surface optique 17, d'une deuxième paroi transversale intermédiaire 24 et d'une deuxième paroi périphérique 25. Une paroi de fond 26 est reliée à la deuxième paroi périphérique 25 et à l'unité de contrôle 2.

La paroi transversale supérieure 21, la première paroi transversale intermédiaire 22 et la deuxième paroi transversale intermédiaire 24 sont sensiblement planes et de dimension égale. La paroi supérieure 21 est reliée à la première paroi intermédiaire 22 par la première surface optique 16. La deuxième paroi intermédiaire 24, la deuxième paroi périphérique 25 et l'unité de contrôle 2 délimitent la deuxième surface optique 17. La première paroi intermédiaire 22 est distante de la deuxième paroi intermédiaire 24, mais elles pourraient également être en contact dans un autre mode de réalisation sans nuire au fonctionnement de l'invention, dès lors que le premier capteur optique 6 est disposé entre la manivelle 14 et le deuxième capteur optique 7.

Pour faciliter la lecture de la [Figure 2], le contenu du premier boîtier de protection 19 et celui du deuxième boîtier de protection 20 ne sont pas représentés, à l'exception du moteur électrique 15 qui lui est logé dans le premier boîtier de protection 19. La première surface optique 16 et la deuxième surface optique 17 couvrent le champ de vision des capteurs optiques 6, 7 avec lequel elles sont mises en vis-à-vis. La première surface optique 16 et la deuxième surface optique 17 sont destinées à protéger une optique du capteur optique, par exemple un objectif dans le cas où le premier capteur optique 6 est une caméra de vision. La première surface optique 16 et la deuxième surface optique 17 sont composées d'une matière apte à laisser circuler les ondes électromagnétiques captées et/ou émises par le capteur optique considéré, sans en affecter ou en modifier la propagation. Dans le cas d'un objectif d'une caméra de vision, la première surface optique 16 est transparente de sorte à laisser passer la lumière du spectre visible et peut consister par exemple en du verre, avantageusement traité par un revêtement anti-UV. Dans le cas d'un capteur LIDAR, la deuxième surface optique 17 est apte à laisser passer les ondes laser et peut consister par exemple en du polycarbonate teinté, là encore avantageusement traité par un revêtement anti-UV.

Dans l'exemple illustré, le dispositif d'entraînement est agencé de telle façon que la manivelle s'étend à l'extérieur du volume défini par les deux capteurs superposés l'un sur l'autre. La paroi supérieure 21 est dotée d'un orifice 27 traversé par l'axe de rotation 8. Cet orifice 27 permet d'insérer une extrémité proximale de la manivelle 14 apte à coopérer avec un arbre moteur 28 du moteur électrique 15, comme montré en [Figure 3].

La manivelle 14 est disposée à une des extrémités longitudinales 10, 11 du bloc de capteurs 4, en l'espèce à la première extrémité longitudinale 10. La manivelle 14 émane du premier capteur optique 6 par sa paroi supérieure 21, et sa branche principale 18 surplombe le bloc de capteurs 4.

Le bloc de capteurs 4 est fixe, solidarisé avec le véhicule 100. Le bloc de capteurs 4 comprend une paroi d'ancrage 29 du bloc de capteurs 4 participant à la fixation du bloc de capteurs 4 sur le véhicule 100. Dans cet exemple de réalisation, la paroi d'ancrage 29 est opposée à la première surface optique 16 et à la deuxième surface optique 17. La paroi d'ancrage 29 est au moins reliée à l'un des capteurs optiques 6, 7. En l'espèce, la paroi supérieure 21 et la paroi d'ancrage 29 sont reliées entre elles.

La figure 3 décrit spécifiquement le système de nettoyage 5 de la [Figure 2] avec le premier ensemble de nettoyage 12, le deuxième ensemble de nettoyage 13, et une partie du dispositif d'entraînement avec notamment la manivelle 14 et une partie du moteur électrique 15 correspondant à l'arbre moteur 28 et au dispositif de réduction 30.

Le premier ensemble de nettoyage 12 comprend au moins une première lame 31 et un premier support de lame 32. Le deuxième ensemble de nettoyage 13 comprend au moins une deuxième lame 33 distincte de la première lame 31 et un deuxième support de lame 34 distinct du premier support de lame 32. La première lame 31 est de dimension longitudinale légèrement inférieure à celle du premier support de lame 32. La deuxième lame 33 est de dimension longitudinale légèrement inférieure à celle du deuxième support de lame 34, et supérieure à la dimension longitudinale de la première lame 31. Le premier ensemble de nettoyage 12 et le deuxième ensemble de nettoyage 13 sont proportionnés par rapport à la première surface optique 16 et par rapport à la deuxième surface optique 17 dont ils doivent assurer le nettoyage par balayage, comme visible sur la [Figure 2].

La première lame 31 coopère avec le premier support de lame 32 de sorte à être maintenue dans le premier support de lame 32, et contenue longitudinalement. Il en est de même pour la deuxième lame 33 et le deuxième support de lame 34. La première lame 31 et la deuxième lame 33 sont faites d'un matériau souple et résistant, par exemple un matériau type caoutchouc ou polymère, apte à racler tout dépôt de salissures sur les surfaces optiques 16, 17 qu'elles balayent.

La première lame 31 s'étend entre une première extrémité longitudinale 53 du premier capteur optique 6 et une deuxième extrémité longitudinale 55 du premier capteur optique 6, opposée à la première extrémité longitudinale 53 du premier capteur optique 6. La deuxième lame 33 s'étend entre une première extrémité longitudinale 54 du deuxième capteur optique 7 et une deuxième extrémité longitudinale 56 du deuxième capteur optique 7, opposée à la première extrémité longitudinale 54 du deuxième capteur optique 7.

La dimension longitudinale de la première lame 31 et du premier support de lame 32 est inférieure à la dimension longitudinale de la première surface optique 16, comme visible sur la [Figure 2]. Ainsi, lorsque la première lame 31 racle la première surface optique 16, elle la racle sur une partie seulement de sa dimension longitudinale. En l'espèce, la première lame 31 est plus proche de la première paroi intermédiaire 22 que de la paroi supérieure 21. Un tel dimensionnement de la lame par rapport à la dimension longitudinale de la surface optique peut notamment être mis en œuvre lorsque le capteur est une caméra optique dont le champ de vision présente une hauteur réduite.

La dimension longitudinale de la deuxième lame 33 et du deuxième support de lame 34 est sensiblement identique à la dimension longitudinale de la deuxième surface optique 17, comme visible sur la [Figure 2]. Ainsi, lorsque la deuxième lame 33 racle la deuxième surface optique 17, elle la racle sur toute sa dimension longitudinale. Un tel dimensionnement de la lame par rapport à la dimension longitudinale de la surface optique peut notamment être mis en œuvre lorsque le capteur est un LIDAR.

La branche principale 18 de la manivelle 14 comprend une première extrémité 35 et une deuxième extrémité 36, opposée à la première extrémité 35. La première extrémité 35 comprend un moyen de fixation 37 à l'arbre moteur 28. La deuxième extrémité 36 comprend un moyen de liaison 38 au premier ensemble de nettoyage 12 et au deuxième ensemble de nettoyage 13.

Le moyen de fixation 37, la branche principale 18 et le moyen de liaison 38 forment un ensemble monobloc. Par ensemble monobloc on entend qu'on ne peut dissocier l'un ou l'autre du moyen de fixation 37, de la branche principale 18 et/ou du moyen de liaison 38 sans porter atteinte à l'intégrité de la manivelle 14.

Le moyen de fixation 37 prolonge la branche principale 18 en formant à leur liaison une forme coudée. Le moyen de fixation 37 s'étend selon l'axe de rotation 8. L'arbre moteur 28 et le moyen de fixation 37 coopèrent, en l'espèce l'arbre moteur 28 est inséré dans une ouverture 39 du moyen de fixation 37 de sorte à ce que le mouvement de rotation de l'arbre moteur 28 entraine en rotation le moyen de fixation 37, et donc toute la manivelle 14. Par exemple, l'ouverture 39 prend une forme strictement complémentaire à l'arbre moteur 28, cette forme étant non circulaire. Un écrou et une partie filetée de l'arbre moteur peuvent permettre également un entraînement mécanique de la manivelle 14.

Le premier ensemble de nettoyage 12 comprend un bras dit premier bras 40 et le deuxième ensemble de nettoyage 13 comprend un bras dit deuxième bras 41. Le premier bras 40 et le deuxième bras 41 sont tous deux liés à la deuxième extrémité 36 de la manivelle 14. Ils relient respectivement le moyen de liaison 38 de la deuxième extrémité 36 de la manivelle 14 au premier support de lame 32 et au deuxième support de lame 34.

Le moyen de liaison 38 de la deuxième extrémité 36 de la manivelle 14 comprend notamment un palier de fixation 42. Dans l'exemple illustré sur la [Figure 3], le palier de fixation est agencé en bout d'une branche secondaire 43 prolongeant sensiblement perpendiculairement la branche principale de la manivelle.

Le palier de fixation 42 est relié au premier support de lame 32 et au deuxième support de lame 34. En l'espèce, la liaison palier de fixation 42/support de lame est indirecte, le bras 40, 41 reliant l'un et/ou l'autre des supports de lame 32, 34 au palier de fixation 42.

Les ensembles de nettoyage 12, 13 sont fixés indépendamment l'un de l'autre sur le palier de fixation 42, dans l'exemple illustré par l'intermédiaire des bras 40, 41. Chaque ensemble de nettoyage est articulé sur le palier de fixation respectivement au niveau d'un premier renfoncement 44 et d'un deuxième renfoncement 45 du palier de fixation 42.

Une première articulation 48 relie le premier ensemble de nettoyage 12, ici le premier support de lame 32 et le bras 40, avec le palier de fixation de la manivelle 14, et une deuxième articulation 49 relie le deuxième ensemble de nettoyage 13, ici le deuxième support de lame 34 et le bras 41, avec ce même palier de fixation de la manivelle 14. La première articulation 48 et la deuxième articulation 49 sont indépendantes l'une de l'autre, de sorte que la force de pression sur la surface vitrée appropriée de tel ou tel ensemble de nettoyage peut varier, alors que l'entraînement en rotation est simultané.

Le palier de fixation peut loger avantageusement des moyens de rappel élastique en position, ici non visibles, visant à plaquer chaque ensemble de nettoyage sur la surface optique qu'il doit nettoyer par balayage.

Par ailleurs, dans l'exemple illustré sur la [Figure 3] notamment, chaque ensemble de nettoyage comporte un ensemble connecteur/adaptateur montés pivotant l'un par rapport à l'autre autour d'un axe de pivotement 46, 47, respectivement disposé au niveau du premier bras 40 et du deuxième bras 41, à l'opposé des articulations 48, 49.Le premier montage pivotant 46 et le deuxième montage pivotant 47 permettent d'ajuster indépendamment la position de la première lame 31 et la deuxième lame 33 contre respectivement la première surface optique 16 et la deuxième surface optique 17.

En l'espèce, la première surface optique 16 et la deuxième surface optique 17 étant dans le prolongement longitudinal l'une de l'autre, la première lame 31 et la deuxième lame 33 s'étendent dans un même axe parallèle à l'axe de rotation 8.

La branche secondaire 43 prolonge la branche principale 18 en formant à la liaison une forme coudée. La branche secondaire 43 s'étend parallèlement à l'axe de rotation 8, selon un axe d'extension 50. La branche secondaire 43 est disposée entre le palier de fixation 42 et la branche principale 18.

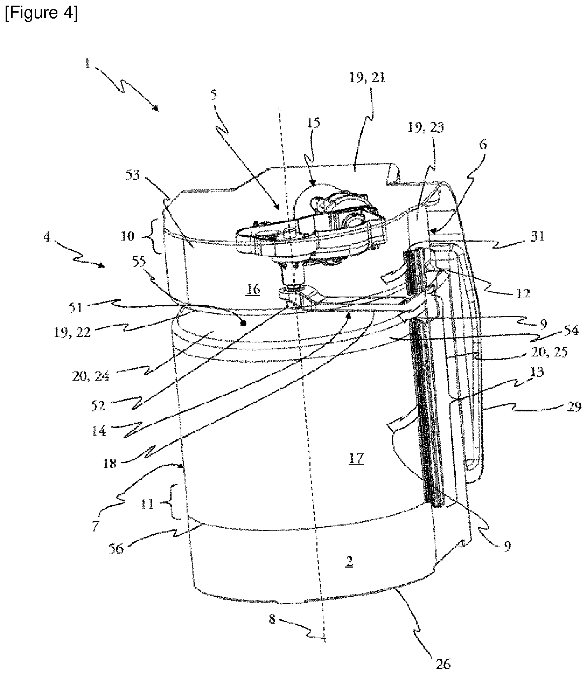

La [Figure 4] montre l'ensemble optique 1 comprenant le système de nettoyage 5 pour le bloc de capteurs 4 dans un deuxième mode de réalisation. Pour faciliter la lecture de la figure, le bloc de capteurs 4 est transparent de sorte à laisser apparaitre le système de nettoyage 5. Par rapport à ce qui a été décrit en [Figure 2], seules les différences vont être à présent énoncées. La description de la [Figure 2] s'applique *mutatis mutandis* à la [Figure 4] et l'on pourra s'y reporter pour la mise en œuvre et la compréhension de l'invention.

Dans le mode de réalisation illustré en [Figure 4], la branche principale 18 de la manivelle 14 est cette fois disposée entre le premier capteur optique 6 et le deuxième capteur optique 7. Le premier capteur optique 6 et le deuxième capteur optique 7 sont à cet effet séparés longitudinalement par une zone de dégagement 51 qui loge la branche principale 18 de la manivelle 14.

La zone de dégagement 51 représente un volume qui s'étend radialement depuis l'axe de rotation 8. La zone de dégagement 51 s'arrête dans le prolongement de la première surface optique 16 et de la deuxième surface optique 17 et elle est délimitée longitudinalement par la première paroi intermédiaire 22 et la deuxième paroi intermédiaire 24.

La zone de dégagement 51 est configurée pour que la manivelle 14 puisse se déplacer en rotation selon l'axe de rotation 8, entre une première position extrême et une deuxième position extrême. Ici, la manivelle 14 est représentée dans la première position extrême, la deuxième position extrême se situant environ à 180° de la première position extrême. Ainsi, mis à part l'arbre moteur 28 qui interagit avec la manivelle 14 et un écrou 52 qui participe à la fixation de la manivelle 14 sur l'arbre moteur 28, seule la manivelle 14 est présente dans la zone de dégagement 51, de sorte à ce que le mouvement de rotation de la manivelle 14 ne soit pas entravée.

Dans le mode de réalisation décrit en [Figure 4], la première lame 31 s'étend entre la première extrémité longitudinale 53 du premier capteur optique 6 et la première extrémité longitudinale 54 du deuxième capteur optique 7. La première lame 31 racle ainsi la partie du premier capteur la plus proche de la zone de dégagement 51, une partie de la première lame 31 faisant face à la zone de dégagement 51. Cette configuration participe à un nettoyage efficace de la première surface optique 16, dans le champ de vision du premier capteur situé au plus proche de la zone de dégagement 51.

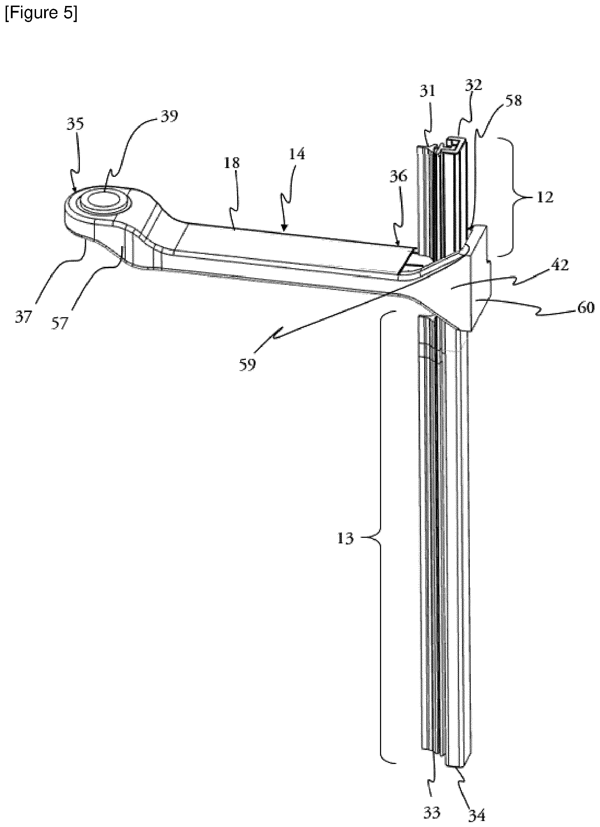

La [Figure 5] décrit spécifiquement certains éléments du système de nettoyage 5 de la [Figure 4] avec le premier ensemble de nettoyage 12, le deuxième ensemble de nettoyage 13 et la manivelle 14. Le moteur électrique 15 n'est pas représenté. Par rapport à ce qui a été décrit en [Figure 3], seules les différences vont être à présent énoncées. La description de la [Figure 3] s'applique *mutatis mutandis* à la [Figure 5] et l'on pourra s'y reporter pour la mise en œuvre et la compréhension de l'invention.

La première extrémité 35 de la branche principale 18 comprend le moyen de fixation 37 doté d'un renfort 57. Le renfort 57 constitue en un épaississement de la première extrémité 35 de la branche principale 18 de la manivelle 14.

Par ailleurs, le moyen de fixation 37 s'étend principalement parallèlement à la branche principale 18, de sorte à ce que la première extrémité 35 de la branche principale 18 prenne une forme cambrée au niveau de son renfort 57. Lorsque l'arbre moteur 28 et le moyen de fixation 37 coopèrent, l'écrou 52 prend appui contre le renfort 57. Le renfort 57 épais et cambrée participe au maintien en position radiale de la manivelle 14, évitant son affaissement.

Le moyen de fixation 37 comprend l'ouverture 39 qui coopère avec l'arbre moteur 28. L'ouverture 39 est, dans l'exemple de la [Figure 5], traversant. L'arbre moteur 28 est en effet destiné à traverser l'ouverture 39 du moyen de fixation 37. L'arbre moteur 28 y est solidarisé au moyen de l'écrou 52, comme visible sur la [Figure 4].

La deuxième extrémité 36 de la branche principale 18 comprend le palier de fixation 42. Celui-ci s'évase depuis la branche principale 18 et est doté d'un passage 58 longitudinal. Ce passage 58 correspond à un évidement du palier de fixation 42. Le premier support de lame 32 et le deuxième support de lame 34 traversent ce passage 58. Le palier de fixation 42 comprend une face intérieure 59 et une face extérieure 60 opposée à la face intérieure 59. Le premier support de lame 32 et le deuxième support de lame 34 ont l'une de leur extrémité longitudinale fixée à la face intérieure 59 du palier de fixation 42. Par exemple, la face intérieure 59 est dotée de deux moyens d'assemblage alignés longitudinalement, l'un pour fixer le premier support de lame 32, l'autre le deuxième support de lame 34. Les deux moyens d'assemblage sont par exemple articulés indépendamment pour que le contact entre les lames et les surfaces optiques puisse être ajusté.

On comprend à la lecture de ce qui précède que la présente invention propose un système de nettoyage configuré pour nettoyer au moins deux capteurs disposés l'un sur l'autre. Ce système de nettoyage, destiné notamment à être intégré dans ensemble optique, mutualise un seul moteur électrique pour deux surfaces optiques à nettoyer. L'efficacité de nettoyage est ajustée par la présence de deux ensembles de nettoyage, propre à chaque surface optique.

## Revendications

1. Système de nettoyage (5) pour un bloc de capteurs (4) d'au moins deux capteurs (6, 7) pour véhicule (100), le système de nettoyage (5) comprenant un premier ensemble de nettoyage (12) comportant au moins une première lame (31) destinée au nettoyage par balayage d'une première surface optique (16) d'un premier capteur optique (6) du bloc de capteurs (4), un deuxième ensemble de nettoyage (13) comportant au moins une deuxième lame (33) distincte de la première lame (31) et destinée au nettoyage par balayage d'une deuxième surface optique (17) d'un deuxième capteur optique (7) du bloc de capteurs (4), le système de nettoyage (5) comprenant en outre un dispositif d'entraînement en rotation simultanée, autour d'un axe commun de rotation (8), du premier ensemble de nettoyage et du deuxième ensemble de nettoyage, le système de nettoyage étant **caractérisé en ce que** le dispositif d'entraînement comportant au moins un palier de fixation (42) sur lequel sont fixés de façon indépendante chacun des ensembles de nettoyage.

2. Système de nettoyage (5) selon la revendication précédente, dans lequel le dispositif d'entraînement comporte une manivelle (14) et un moteur électrique (15), le premier ensemble de nettoyage (12) et le deuxième ensemble de nettoyage (13) étant entraînés en rotation par le moteur électrique (15) par l'intermédiaire de la manivelle (14) qui porte ledit palier de fixation (42).

3. Système de nettoyage (5) selon la revendication 1 ou 2, dans lequel le premier ensemble de nettoyage (12) comprend au moins la première lame (31) et un premier support de lame (32), et le deuxième ensemble de nettoyage (13) comprend au moins la deuxième lame (33) distincte de la première lame (31) et un deuxième support de lame (34) distinct du premier support de lame (32).

4. Système de nettoyage (5) selon la revendication précédente, dans lequel le premier support de lame (32) est reliée au palier de fixation (42) par une première articulation (48) et le deuxième support de lame (34) est reliée au palier de fixation (42) par une deuxième articulation (49) indépendante.

5. Système de nettoyage (5) selon l'une quelconque des revendications 3 ou 4, dans lequel l'un et/ou l'autre des ensembles de nettoyage (12, 13) comprend un bras (40, 41), le bras reliant l'un et/ou l'autre des supports de lame (32, 34) au palier de fixation (42).

6. Ensemble optique (1) pour véhicule (100) comprenant au moins un bloc de capteurs (4) et un système de nettoyage (5) selon la revendication 1 à 5, le bloc de capteurs (4) comprenant au moins un premier capteur optique (6) et un deuxième capteur optique (7) superposés l'un sur l'autre selon l'axe de rotation (8), le premier capteur optique (6) ayant une première surface optique (16) et le deuxième capteur optique (7) ayant une deuxième surface optique (17), le système de nettoyage (5) comprenant le premier ensemble de nettoyage (12) destiné au nettoyage de la première surface optique (16) et le deuxième ensemble de nettoyage (13) destiné au nettoyage de la deuxième surface optique (17).

7. Ensemble optique (1) selon la revendication précédente, dans lequel la manivelle (14) est disposée à une des extrémités longitudinales du bloc de capteurs (4).

8. Ensemble optique (1) selon la revendication 6, dans lequel le premier capteur optique (6) et le deuxième capteur optique (7) sont séparés d'une zone de dégagement (51), une branche principale (18) de la manivelle (14) étant disposée dans la zone de dégagement (51), la zone de dégagement (51) étant configurée pour que la manivelle (14) puisse se déplacer en rotation selon l'axe de rotation (8), entre une première position extrême et une deuxième position extrême.

9. Ensemble optique (1) selon l'une quelconque des revendications 6 à 8, dans lequel la deuxième surface optique (17) est de dimension longitudinale, selon la direction parallèle à l'axe de rotation, plus grande que la première surface optique (16), et le deuxième ensemble de nettoyage (13) est de dimension longitudinale plus grande que le premier ensemble de nettoyage (12).

10. Dispositif d'aide à la conduite (200) comprenant au moins un système de nettoyage (5) selon l'une quelconque des revendications 1 à 5 ou un ensemble optique (1) selon l'une quelconque des revendications 6 à 9.

## Patentansprüche

1. Reinigungssystem (5) für eine Sensoreinheit (4) aus mindestens zwei Sensoren (6, 7) für ein Fahrzeug (100), wobei das Reinigungssystem (5) eine erste Reinigungsanordnung (12), die mindestens einen ersten Wischgummi (31) aufweist, der zur Reinigung einer ersten optischen Fläche (16) eines ersten optischen Sensors (6) der Sensoreinheit (4) durch Wischen bestimmt ist, und eine zweite Reinigungsanordnung (13), die mindestens einen zweiten Wischgummi (33) aufweist, der vom ersten Wischgummi (31) verschieden ist und zur Reinigung einer zweiten optischen Fläche (17) eines zweiten optischen Sensors (7) der Sensoreinheit (4) durch Wischen bestimmt ist, umfasst, wobei das Reinigungssystem (5) außerdem eine Antriebsvorrichtung zur gleichzeitigen Rotation der ersten Reinigungsanordnung und der zweiten Reinigungsanordnung um eine gemeinsame Drehachse (8) umfasst, wobei das Reinigungssystem **dadurch gekennzeichnet ist, dass** die Antriebsvorrichtung mindestens ein Befestigungslager (42) aufweist, an welchem die Reinigungsanordnungen unabhängig voneinander befestigt sind.

2. Reinigungssystem (5) nach dem vorhergehenden Anspruch, wobei die Antriebsvorrichtung eine Kurbel (14) und einen Elektromotor (15) aufweist, wobei die erste Reinigungsanordnung (12) und die zweite Reinigungsanordnung (13) von dem Elektromotor (15) über die Kurbel (14), welche das Befestigungslager (42) trägt, drehend angetrieben werden.

3. Reinigungssystem (5) nach Anspruch 1 oder 2, wobei die erste Reinigungsanordnung (12) mindestens den ersten Wischgummi (31) und einen ersten Wischgummiträger (32) umfasst und die zweite Reinigungsanordnung (13) mindestens den zweiten Wischgummi (33) und einen zweiten Wischgummiträger (34), der vom ersten Wischgummiträger (32) verschieden ist, umfasst.

4. Reinigungssystem (5) nach dem vorhergehenden Anspruch, wobei der erste Wischgummiträger (32) mit dem Befestigungslager (42) durch ein erstes Gelenk (48) verbunden ist und der zweite Wischgummiträger (34) mit dem Befestigungslager (42) durch ein unabhängiges zweites Gelenk (49) verbunden ist.

5. Reinigungssystem (5) nach einem der Ansprüche 3 oder 4, wobei die eine und/oder die andere der Reinigungsanordnungen (12, 13) einen Arm (40, 41) umfasst, wobei der Arm den einen und/oder den anderen der Wischgummiträger (32, 34) mit dem Befestigungslager (42) verbindet.

6. Optische Anordnung (1) für ein Fahrzeug (100), welche mindestens eine Sensoreinheit (4) und ein Reinigungssystem (5) nach Anspruch 1 bis 5 umfasst, wobei die Sensoreinheit (4) mindestens einen ersten optischen Sensor (6) und einen zweiten optischen Sensor (7) umfasst, die entlang der Drehachse (8) übereinander angeordnet sind, wobei der erste optische Sensor (6) eine erste optische Fläche (16) aufweist und der zweite optische Sensor (7) eine zweite optische Fläche (17) aufweist, wobei das Reinigungssystem (5) die erste Reinigungsanordnung (12), die zur Reinigung der ersten optischen Fläche (16) bestimmt ist, und die zweite Reinigungsanordnung (13), die zur Reinigung der zweiten optischen Fläche (17) bestimmt ist, umfasst.

7. Optische Anordnung (1) nach dem vorhergehenden Anspruch, wobei die Kurbel (14) an einem der Längsenden der Sensoreinheit (4) angeordnet ist.

8. Optische Anordnung (1) nach Anspruch 6, wobei der erste optische Sensor (6) und der zweite optische Sensor (7) durch einen Freiraum (51) getrennt sind, wobei ein Hauptarm (18) der Kurbel (14) im Freiraum (51) angeordnet ist, wobei der Freiraum (51) so gestaltet ist, dass sich die Kurbel (14) um die Drehachse (8) zwischen einer ersten äußersten Position und einer zweiten äußersten Position drehend bewegen kann.

9. Optische Anordnung (1) nach einem der Ansprüche 6 bis 8, wobei die zweite optische Fläche (17) eine größere Längsabmessung in der zur Drehachse parallelen Richtung als die erste optische Fläche (16) hat und die zweite Reinigungsanordnung (13) eine größere Längsabmessung als die erste Reinigungsanordnung (12) hat.

10. Fahrassistenzvorrichtung (200), welche mindestens ein Reinigungssystem (5) nach einem der Ansprüche 1 bis 5 oder eine optische Anordnung (1) nach einem der Ansprüche 6 bis 9 umfasst.

## Claims

1. Cleaning system (5) for a sensors unit (4) of at least two sensors (6, 7) for a vehicle (100), the cleaning system (5) comprising a first cleaning assembly (12) comprising at least a first blade (31) intended, by sweeping across it, to clean a first optical surface (16) of a first optical sensor (6) of the sensors unit (4), a second cleaning assembly (13) comprising at least a second blade (33) distinct from the first blade (31) and intended, by sweeping across it, to clean a second optical surface (17) of a second optical sensor (7) of the sensors unit (4), the cleaning system (5) further comprising a rotational-drive device for simultaneously driving the rotation, about a common axis of rotation (8), of the first cleaning assembly and of the second cleaning assembly, the cleaning system being **characterized in that** the drive device comprises at least one fixing bearing (42) to which each of the cleaning assemblies is fixed independently.

2. Cleaning system (5) according to the preceding claim, wherein the drive device comprises a crank (14) and an electric motor (15), the first cleaning assembly (12) and the second cleaning assembly (13) being rotationally driven by the electric motor (15) via the crank (14) which bears said fixing bearing (42).

3. Cleaning system (5) according to Claim 1 or 2, wherein the first cleaning assembly (12) comprises at least the first blade (31) and a first blade support (32), and the second cleaning assembly (13) comprises at least the second blade (33) distinct from the first blade (31) and a second blade support (34) distinct from the first blade support (32).

4. Cleaning system (5) according to the preceding claim, wherein the first blade support (32) is connected to the fixing bearing (42) by a first articulation (48) and the second blade support (34) is connected to the fixing bearing (42) by an independent second articulation (49) .

5. Cleaning system (5) according to either one of Claims 3 or 4, wherein one and/or the other of the cleaning assemblies (12, 13) comprises an arm (40, 41), the arm connecting one and/or the other of the blade supports (32, 34) to the fixing bearing (42).

6. Optical assembly (1) for a vehicle (100) comprising at least one sensors unit (4) and a cleaning system (5) according to Claim 1 to 5, the sensors unit (4) comprising at least a first optical sensor (6) and a second optical sensor (7) which are superposed one on the other along the axis of rotation (8), the first optical sensor (6) having a first optical surface (16) and the second optical sensor (7) having a second optical surface (17), the cleaning system (5) comprising the first cleaning assembly (12) intended for cleaning the first optical surface (16) and the second cleaning assembly (13) intended for cleaning the second optical surface (17) .

7. Optical assembly (1) according to the preceding claim, wherein the crank (14) is positioned at one of the longitudinal ends of the sensors unit (4).

8. Optical assembly (1) according to Claim 6, wherein the first optical sensor (6) and the second optical sensor (7) are separated by a clearance zone (51), a main branch (18) of the crank (14) being placed in the clearance zone (51), the clearance zone (51) being configured so that the crank (14) is able to move in rotation about the axis of rotation (8) between a first extreme position and a second extreme position.

9. Optical assembly (1) according to any one of Claims 6 to 8, wherein the second optical surface (17) has a greater longitudinal dimension, in the direction parallel to the axis of rotation, than the first optical surface (16), and the second cleaning assembly (13) has a greater longitudinal dimension than the first cleaning assembly (12).

10. Driving aid device (200) comprising at least a cleaning system (5) according to any one of Claims 1 to 5 or an optical assembly (1) according to any one of Claims 6 to 9.
